Europäisches Patentamt

European Patent Office

Office européen des brevets

(11) Veröffentlichungsnummer : **0 569 741 B1**

(12) # EUROPÄISCHE PATENTSCHRIFT

(45) Veröffentlichungstag der Patentschrift :
18.10.95 Patentblatt 95/42

(51) Int. Cl.⁶ : **F24D 19/00, F24D 19/10**

(21) Anmeldenummer : **93106437.2**

(22) Anmeldetag : **21.04.93**

(54) **Verfahren zur Steuerung einer Umwälzpumpe einer Heizungsanlage und Vorrichtung zur Durchführung des Verfahrens.**

(30) Priorität : **12.05.92 CH 1512/92**

(43) Veröffentlichungstag der Anmeldung :
**18.11.93 Patentblatt 93/46**

(45) Bekanntmachung des Hinweises auf die Patenterteilung :
**18.10.95 Patentblatt 95/42**

(84) Benannte Vertragsstaaten :
**AT CH DE DK FR GB LI NL SE**

(56) Entgegenhaltungen :
**DE-A- 2 937 318**
**DE-A- 4 033 163**

(73) Patentinhaber : **Landis & Gyr Technology Innovation AG**
**CH-6301 Zug (CH)**

(72) Erfinder : **Marbach, Kuno**
**Widspüelmatte 2**
**CH-6043 Adligenswil (CH)**
Erfinder : **Hausheer, Pius**
**Allmendweg 7**
**CH-6330 Cham (CH)**

(74) Vertreter : **Müller, Hans-Jürgen, Dipl.-Ing. et al**
**Müller, Schupfner & Gauger**
**Postfach 10 11 61**
**D-80085 München (DE)**

EP 0 569 741 B1

**Beschreibung**

Die Erfindung bezieht sich auf ein Verfahren zur Steuerung einer Umwälzpumpe einer Heizungsanlage gemäß dem Oberbegriff des Anspruchs 1 und eine Vorrichtung zur Durchführung des Verfahrens gemäß dem Oberbegriff des Anspruchs 14.

Es ist bekannt, die Umwälzpumpe einer Heizungsanlage dann abzuschalten, wenn in der Heizungsanlage kein Wärmebedarf besteht. Dieser Fall tritt beispielsweise regelmäßig dann ein, wenn am Ende eines Tages der Raumtemperatur-Sollwert von einem höheren auf einen tieferen Wert umgeschaltet wird, um während der Nacht Energie einzusparen. Durch das Abschalten der Umwälzpumpe wird ebenfalls Energie eingespart und außerdem werden nachts besonders störende Strömungsgeräusche vermieden. Das Abschalten der Umwälzpumpe muß jedoch dann unterbleiben, wenn für die Heizungsanlage die Gefahr des Einfrierens während kalter Nächte besteht.

Aus der DE-PS 29 37 318 ist eine Steuereinrichtung bekannt, durch die die Umwälzpumpe einer Heizungsanlage bei Frostgefahr eingeschaltet wird.

Aus der DE-OS 40 33 163 ist ein Steuerverfahren für eine Heizungsanlage bekannt, bei dem zur Vermeidung des Einfrierens von Leitungsteilen die Umwälzpumpe wenigstens zeitweise und intermittierend dann in Betrieb gesetzt wird, wenn die Außentemperatur einen bestimmten Vergleichswert unterschreitet und die Umwälzpumpe schon eine gewisse Zeit außer Betrieb war.

Nun sind auch Heizungsanlagen bekannt, bei denen die Regelung der Heizleistung nicht in Abhängigkeit von der Außentemperatur erfolgt, so daß bei solchen Heizungsanlagen gar kein Außentemperaturfühler vorhanden ist. Bei solchen Heizungsanlagen kann man daher die Außentemperatur als Kriterium für das Schalten der Umwälzpumpe nicht heranziehen. Es ist daher üblich, bei solchen Anlagen auf das nächtliche Abschalten der Umwälzpumpe unter Inkaufnahme der damit verbundenen Nachteile ganz zu verzichten.

Der Erfindung liegt die Aufgabe zugrunde, ein Verfahren zur Steuerung einer Umwälzpumpe anzugeben, bei dem trotz des Fehlens eines Außentemperaturfühlers die Umwälzpumpe auch im sogenannten Absenkbetrieb, bei dem die Temperatur in den zu beheizenden Räumen gegenüber dem Komfortbetrieb von beispielsweise 20 Grad Celsius zwecks Energieeinsparung durchaus beträchtlich abgesenkt werden kann, ausgeschaltet und nur dann wieder in Betrieb gesetzt wird, wenn tatsächlich die Gefahr des Einfrierens von Leitungsteilen besteht.

Die genannte Aufgabe wird erfindungsgemäß durch die Merkmale des Anspruchs 1 gelöst. Eine Vorrichtung zur Durchführung des Verfahrens ist im Anspruch 14 gekennzeichnet. Vorteilhafte Ausgestaltungen ergeben sich aus den abhängigen Ansprüchen.

Nachfolgend wird ein Ausführungsbeispiel der Erfindung anhand der Zeichnung näher erläutert. Es zeigen

Fig. 1        ein Temperatur- und Schaltzustands-Diagramm und

Fig. 2        Einzelheiten eines Heizungsreglers.

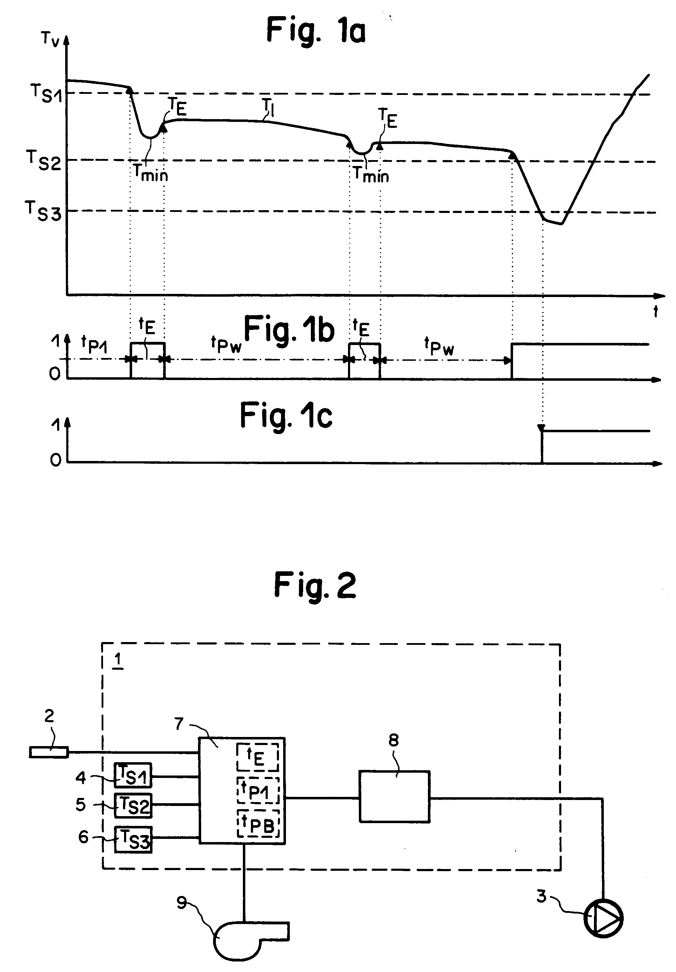

Die Fig. 1 zeigt ein Diagramm, in dem im oberen Diagrammteil (Fig. 1a) der zeitliche Verlauf des Istwerts $T_I$ einer in der Heizungsanlage ermittelbaren Temperatur gezeigt und mit dem Schaltzustand der Umwälzpumpe und dem Schaltzustand des Brenners in Beziehung gesetzt ist. Der Temperaturfühler, mit dem die Temperatur $T_I$ gemessen wird, ist entweder ein sogenannter Vorlauftemperaturfühler oder aber - bei Heizungsanlagen ohne Mischventil - der Kesseltemperaturfühler.

In diesem Diagrammteil sind drei Linien für verschiedene Schwellenwerte der Temperatur eingezeichnet: ein erster Schwellenwert $T_{S1}$, ein zweiter Schwellenwert $T_{S2}$ und ein dritter Schwellenwert $T_{S3}$. Die Schwellenwerte $T_{S1}$ und $T_{S2}$ betreffen dabei in noch zu schildernder Weise die Beeinflussung des Schaltzustands der Umwälzpumpe, während der Schwellenwert $T_{S3}$ maßgeblich für die Wiedereinschaltung des Brenners ist.

Der Kurvenzug im darunter liegenden Diagrammteil der Fig. 1b gibt den Schaltzustand der Umwälzpumpe an, der gemäß der Angabe auf der Ordinatenachse "0" oder "1" sein kann, wobei "0" die Bedeutung von "Pumpe AUS" und "1" die Bedeutung von "Pumpe EIN" hat. Die Abszissenachse stellt die Zeit dar.

Der Kurvenzug im darunter liegenden Diagrammteil der Fig 1c gibt den Schaltzustand des Brenners an, der gemäß der Angabe auf der Ordinatenachse "0" oder "1" sein kann. Die Abszissenachse stellt wiederum die Zeit dar.

Für die nachfolgende Betrachtung sei folgender Ausgangszustand angenommen: Der die Heizungsanlage steuernde Heizungsregler sei im Absenkbetrieb. Da nicht geheizt werden soll, ist die Umwälzpumpe abgeschaltet. Sie war unmittelbar zum Zeitpunkt des Übergangs vom Komfort- zum Absenkbetrieb abgeschaltet worden.

Der Temperaturfühler ermittelt einen bestimmten Wert für die Temperatur im Heizungsmedium. Diese Temperatur ist jedoch nicht für die Temperatur im gesamten Heizungskreislauf repräsentativ, sondern gilt wegen des Stillstands der Umwälzpumpe nur für den Einbauort des Temperaturfühlers. An anderen Stellen der

2

Heizungsanlage kann die Temperatur durchaus erheblich niedriger sein.

Wird nun zu einem bestimmten Zeitpunkt, nämlich nach Ablauf einer ersten Pausendauer $t_{P1}$ (Fig. 1b), die Umwälzpumpe für eine bestimmte Zeit $t_E$ eingeschaltet, so wird das Heizungsmedium im Heizungskreislauf umgewälzt und nacheinander strömen Teile des Heizungsmediums aus allen Teilen des Heizungskreislaufs am Temperaturfühler vorbei. Gleichzeitig findet auch eine gewisse Durchmischung der verschiedenen Teilmengen des Heizungsmediums im Heizungskreislauf statt. Der am Temperaturfühler erfaßbare Temperaturwert $T_I$ ist infolge der Umwälzung Schwankungen unterworfen. Während des Zeitraums $t_E$ wird das Minimum $T_{min}$ (Fig. 1a) der Temperatur im Heizungskreislauf erfaßt. Außerdem wird die Temperatur in jenem Moment gemessen, da die Umwälzpumpe wieder abgestellt ist. Diese als $T_E$ bezeichnete Endtemperatur kann dann als repräsentativ für den Wärmeinhalt im Heizungskreislauf angesehen werden, wenn der Zeitraum $t_E$ groß genug gewählt wird, um durch die Umwälzung auch eine ausreichende Durchmischung zu erreichen.

Die erste Pausendauer $t_{P1}$ kann vorteilhaft fest vorgegeben sein. Ihre Größe richtet sich vor allem nach der Bauart der Heizungsanlage und des Gebäudes, insbesondere nach deren Isolation. Sie kann beispielsweise 2 Stunden betragen.

Es kann vorteilhaft sein, die Einschaltdauer $t_E$ konstant zu wählen. Die Einschaltdauer $t_E$ kann vorteilhaft eine anlagenspezifische Größe sein, die einstellbar ist. Die Größe dieser Einschaltdauer $t_E$ ist dabei so zu wählen, daß während eines Einschaltzyklus das Wasser in der Heizungsanlage mindestens einmal vollkommen umgewälzt wird. Je größer das Wasservolumen der Heizungsanlage ist, desto größer ist die Einschaltdauer $t_E$ zu wählen.

Die Meßwerte $T_{min}$ und $T_E$ geben einen Anhalt dafür, wie stark der Heizungskreislauf während des Zeitraums $t_{P1}$ abgekühlt ist. Damit lassen sich die Auskühlverluste abschätzen. Diese lassen sich auch durch andere Merkmale des Temperaturverlaufs, beispielsweise einen Temperaturgradienten, abschätzen, die im Bereich der Einschaltdauer $t_E$ oder angrenzend daran ermittelt werden. Aufgrund der Auskühlverluste ließe sich berechnen, zu welchem Zeitpunkt die Heizungsanlage einfrieren würde, sofern die Auskühlung gleichmäßig verläuft. Da das Ausmaß der Auskühlung aber von der Außentemperatur abhängt und diese mangels eines Außentemperaturfühlers nicht gemessen werden kann, kann aufgrund der Meßwerte $T_{min}$ und $T_E$ immerhin näherungsweise abgeschätzt werden, wie lang eine nachfolgende Pausendauer $t_{Pw}$ sein darf.

Die nachfolgende Pausendauer $t_{Pw}$ kann vorteilhaft außer von den Meßwerten $T_{min}$ und $T_E$ auch von einer einstellbaren Basis-Pausendauer $t_{PB}$ abhängig sein. Diese Basis-Pausendauer $t_{PB}$ kann einstellbar sein und beispielsweise 6 Stunden betragen. Gegenüber dieser Basis-Pausendauer $t_{PB}$ wird die nachfolgende Pausendauer $t_{Pw}$ verkürzt, wenn der Minimalwert $T_{min}$ unter dem Schwellenwert $T_{S1}$ liegt, wobei das Ausmaß der Verkürzung von der Größe der Unterschreitung des Schwellenwerts $T_{S1}$ abhängig sein kann. Analog dazu kann die Verkürzung der Pausendauer auch vom Endwert $T_E$ abhängig gemacht sein. Es ist auch möglich, beispielsweise einen Mittelwert von $T_{min}$ und $T_E$ heranzuziehen.

Unterschreiten die Werte $T_{min}$ oder $T_E$ oder der Mittelwert aus beiden den ersten Schwellenwert $T_{S1}$ und liegen höher als der zweite Schwellenwert $T_{S2}$, so kann vorteilhaft die Dauer der nachfolgenden Pausendauer $t_{Pw}$ nach folgender Formel berechnet werden:

$$t_{Pw} = t_{PB} \cdot \frac{T_x - T_{S2}}{T_{S1} - T_{S2}},$$

worin $T_x$ der Wert $T_{min}$, $T_E$ oder ein Mittelwert aus beiden sein kann. Die Pausendauer $t_{Pw}$ ist dann immer kleiner als die Basis-Pausendauer $t_{PB}$.

Ist die Auskühlung der Heizanlage sehr gering, so ist es vorteilhaft, die folgende Pausendauer $t_{Pw}$ zu verlängern. Es ist deshalb vorteilhaft, die Berechnung der nachfolgenden Pausendauer $t_{Pw}$ nicht von der Unterschreitung des ersten Schwellenwertes $T_{S1}$ abhängig zu machen. Wird die Berechnung für die nachfolgende Pausendauer $t_{Pw}$ gemäß der vorstehenden Formel auch dann durchgeführt, wenn beispielsweise der Minimalwert $T_{min}$ oberhalb des Schwellenwertes $T_{S1}$ liegt, so ist die nachfolgende Pausendauer $t_{Pw}$ länger als die Basis-Pausendauer $t_{PB}$.

Nach Ablauf der Pausendauer $t_{P1}$ wird die Umwälzpumpe wiederum eingeschaltet. Die Einschaltzeit kann dabei vorteilhaft gleich groß sein wie beim vorgehenden Einschaltzyklus, also die Größe $t_E$ haben. Auch während dieses Einschatzyklus wird wiederum der Minimalwert $T_{min}$ ermittelt und am Ende des Einschaltzyklus die Endtemperatur $T_E$. Mit diesen beiden Werten wird nun die Länge der nachfolgenden Pausendauer $t_{Pw}$ wie zuvor angegeben berechnet.

Es ist auch möglich, bei der Berechnung der neuen Pausendauer $t_{Pw}$ statt der Basis-Pausendauer $t_{PB}$ die jeweils zurückliegende Pausendauer $t_{Pw}$ zu berücksichtigen oder eine gleitende Durchschnittsberechnung anzuwenden.

Besteht keine Frostgefahr, so daß der erste Schwellenwert $T_{S1}$ gar nicht unterschritten wird, so können die nachfolgenden Pausendauern $t_{Pw}$ immer größer werden. Es ist vorteilhaft, die Pausendauer zu begrenzen.

Einerseits soll die Pausendauer nicht unendlich sein, denn es ist bekannt, daß Umwälzpumpen bei längerem Stillstand zum Blockieren neigen. Es ist also vorteilhaft, die Umwälzpumpe grundsätzlich periodisch einzuschalten, beispielsweise aller 24 Stunden, denn bei Nichtwohnbauten kommen lange Pausen zwischen den Komfortperioden, während denen auf Behaglichkeit hin geheizt wird, durchaus vor. Es ist deshalb vorteilhaft, die Pausendauer unabhängig von der Unterschreitung einer der Temperaturschwellen auf einen Maximalwert $t_{Pmax}$ von beispielsweise 24 Stunden zu begrenzen. Andererseits kann der Fall eintreten, daß sich bei der Berechnung der Pausendauer gemäß der zuvor angegebenen Formel ein sehr kleiner Wert ergibt, beispielsweise 30 Sekunden. Da in einer so kleinen Zeitspanne ein Einfrieren ohnehin nicht möglich ist, ist es vorteilhaft, eine minimale Pausendauer $t_{Pmin}$ von beispielsweise 20 Minuten vorzusehen.

Vorteilhaft ist es, wenn die Umwälzpumpe dauernd eingeschaltet bleibt, die Pausendauer $t_{Pw}$ also auf Null gesetzt wird, sobald die Temperatur in der Heizungsanlage den Schwellenwert $T_{S2}$ unterschreitet, denn ein Abkühlen auf eine derart tiefe Temperatur bedeutet akute Einfriergefahr. Hier könnte schon während relativ kurzer Abschaltung der Umwälzpumpe die Gefahr bestehen, daß Teile der Heizungsanlage einfrieren. Als Temperaturwert wird hier immer das Minimum $T_{min}$ der Temperatur ausgewertet. Das Setzen der Pausendauer $t_{Pw}$ auf Null bedeutet, daß sofort die Zeit $t_E$ gestartet wird, während der die Umwälzpumpe läuft. Das bedeutet, daß der dauernde Lauf der Umwälzpumpe erst dann unterbrochen wird und die Rückkehr zum Taktbetrieb erfolgt, wenn die Temperatur in der Heizungsanlage über den Schwellenwert $T_{S2}$ gestiegen ist.

Während einer Absenkperiode kann sich das Einschalten der Umwälzpumpe mehrfach wiederholen. In Fig. 1a ist nun der weitere Verlauf des Istwertes $T_I$ gezeigt. Nach dem erneuten Einschalten der Umwälzpumpe zeigt sich, daß der Istwert $T_I$ unter den dritten Schwellenwert $T_{S3}$ fällt. In dem Moment, da der Istwert $T_I$ den Schwellenwert $T_{S3}$ unterschreitet, wird der Brenner eingeschaltet. Der Brenner bleibt nun eingeschaltet, und zwar beispielsweise in bekannter Weise so lange, bis eine vorgegebene Kesselminimaltemperatur erreicht ist.

In der Fig. 1b ist dargestellt, daß die Pumpe eingeschaltet bleibt, solange der Brenner in Betrieb ist. Das muß nicht so sein, sondern es kann hierbei auch die als Kesselanfahrentlastung bekannte Maßnahme angewendet werden, daß die Umwälzpumpe zunächst nach dem Einschalten des Brenners ausgeschaltet wird und erst nach Erreichen der Kesselminimaltemperatur wieder eingeschaltet wird.

Bei Heizungsanlagen mit Mischerheizkreis ist es die Regel, daß im Absenkbetrieb das Mischventil geschlossen ist, so daß der Kesselkreis vom Heizungskreis abgetrennt ist. Da aber in einem solchen Fall im Heizkessel meist noch ein gewisser Wärmevorrat vorhanden ist, ist es vorteilhaft, wenn beim Unterschreiten des ersten Schwellenwertes $T_{S1}$ das Mischventil in die "Offen"-Stellung gesteuert wird, so daß das im Heizkessel eventuell noch vorhandene wärmere Wasser in den Heizungskreis gefördert werden kann.

Die Fig. 2 zeigt eine Vorrichtung zur Durchführung des Verfahrens, nämlich einen Heizungsregler 1, an den ein im Heizungskreislauf angeordneter Temperaturfühler 2 angeschlossen ist und der eine Umwälzpumpe 3 steuert. Im Heizungsregler 1 sind nur jene Einzelheiten dargestellt, die für die Verwirklichung des vorgenannten Steuerverfahrens für die Umwälzpumpe 3 von Bedeutung sind.

Diese Einzelheiten sind: ein erster Sollwertgeber 4, der den Wert der Temperaturschwelle $T_{S1}$ bestimmt, ein zweiter Sollwertgeber 5, der den Wert der Temperaturschwelle $T_{S2}$ bestimmt, ein dritter Sollwertgeber 6, der den Wert der Temperaturschwelle $T_{S3}$ bestimmt, ein Rechenglied 7 und ein Schaltglied 8.

Die Sollwertgeber 4, 5 und 6 und der Temperaturfühler 2 sind an je einen Eingang des Rechenglieds 7 angeschlossen. Ein Ausgang des Rechenglieds 7 ist mit einem Eingang des Schaltglieds 8 verbunden, an dessen Ausgang die Umwälzpumpe 3 angeschlossen ist. Ein weiterer Ausgang des Rechenglieds 7 steuert über nicht dargestellte, aber üblicherweise vorhandene Aggregate, zum Beispiel Relais und Feuerungsautomat, einen Brenner 9.

Das Rechenglied 7 enthält Elemente, die die Steuerung gemäß den zuvor genannten Verfahrensschritten und -regeln ausführen. Es berechnet die Pausendauer $t_{Pw}$ und löst beim Unterschreiten des Schwellenwertes $T_{S3}$ das Einschalten des Brenners 9 aus. Das Rechenglied 7 kann einen internen Timer enthalten oder aber durch eine im Heizungsregler 1 ohnehin enthaltene Zeituhr beeinflußt sein. Auf einem Speicherplatz des Rechenglieds 7 kann die Einschaltzeit $t_E$ fest gespeichert sein. Es können auch Mittel vorhanden sein, um die Einschaltzeit $t_E$ zu variieren. In gleicher Weise können auch Speicherplätze und Mittel vorhanden sein, um die erste Pausendauer $t_{P1}$ und die Basis-Pausendauer $t_{PB}$ zu speichern und zu variieren. Am mit dem Schaltglied 8 verbundenen Ausgang des Rechengliedes 7 erscheint ein Logiksignal, das bestimmt, ob die Umwälzpumpe 3 ein- oder ausgeschaltet sein soll. Dieses Logiksignal wird dem Schaltglied 8 zugeführt, das entsprechend diesem Logiksignal die Umwälzpumpe 3 schaltet.

Im Falle eines digital arbeitenden Heizungsreglers 1 sind die genannten Elemente durch Programmteile bzw. Speicherplätze nachgebildet.

Die zuvor genannten Schwellenwerte können fest vorgegeben oder einstellbar sein und können beispielsweise folgende Werte und/oder Einstellbereiche aufweisen:

Schwellenwert $T_{S1}$ = 16 Grad (Einstellbereich 5 - 20 Grad)

Schwellenwert $T_{S2}$ = 6 Grad (Einstellbereich 4 - 15 Grad)
Schwellenwert $T_{S3}$ = 4 Grad (Einstellbereich 2 - 12 Grad)

Durch das periodische Einschalten der Umwälzpumpe 3 wird sichergestellt, daß das in den der Auskühlung am meisten ausgesetzten Teilen der Heizungsanlage befindliche Heizungsmedium an den in der Heizungsanlage eingebauten Temperaturfühlern, z.B. Vorlauf- und Kesseltemperaturfühler, vorbeigeführt wird, so daß entsprechend der fortschreitenden Auskühlung auch rechtzeitig der Wärmeerzeuger durch die dafür bestimmten Mittel in Betrieb gesetzt wird. Ohne daß ein Außentemperaturfühler vorhanden sein muß, wird damit ein zuverlässiger Schutz der Heizungsanlage vor dem Einfrieren gewährleistet.

**Patentansprüche**

1. Verfahren zur Steuerung einer Umwälzpumpe (3) einer Heizungsanlage mit einem Wärmeerzeuger und frostgefährdeten Leitungsteilen mittels eines Heizungsreglers (1), der mindestens einen Sollwertgeber (4, 5, 6) aufweist und von einem im Heizungskreislauf angeordneten Temperaturfühler (2) beeinflußt wird, dadurch gekennzeichnet, daß während einer Absenkperiode die Umwälzpumpe (3) periodisch für eine bestimmte Zeit ($t_E$) eingeschaltet wird, daß im Bereich dieser Zeit ($t_E$) oder angrenzend an diese Zeit ($t_E$) ein Merkmal des Temperaturverlaufs mittels des im Heizungskreislauf angeordneten Temperaturfühlers (2) ermittelt wird und daß die Pausendauer ($t_{Pw}$) bis zum nächsten Einschalten der Umwälzpumpe (3) aufgrund dieses Merkmals bestimmt wird.

2. Verfahren nach Anspruch 1, dadurch gekennzeichnet, daß das Minimum ($T_{min}$) der Temperatur während der Laufzeit der Umwälzpumpe (3) ermittelt wird und dieses Minimum ($T_{min}$) die Pausendauer ($t_{Pw}$) bis zum nächsten Einschalten der Pumpe bestimmt.

3. Verfahren nach Anspruch 1 oder 2, dadurch gekennzeichnet, daß die Temperatur ($T_E$) am Ende der Laufzeit der Umwälzpumpe (3) ermittelt wird und dieser Wert ($T_E$) für die Bestimmung der Pausendauer ($t_{Pw}$) bis zum nächsten Einschalten der Umwälzpumpe (3) berücksichtigt wird.

4. Verfahren nach einem der Ansprüche 1 bis 3, dadurch gekennzeichnet, daß die Pausendauer ($t_{Pw}$) von einer einstellbaren Basis-Pausendauer ($t_{PB}$) und davon abhängig gemacht wird, wie weit das Minimum ($T_{min}$) der Temperatur während der Laufzeit der Umwälzpumpe (3) und/oder die Temperatur ($T_E$) am Ende der Laufzeit der Umwälzpumpe (3) einen ersten Schwellenwert ($T_{S1}$) unterschreitet.

5. Verfahren nach Anspruch 3, daß die Pausendauer ($t_{Pw}$) gleich Null gesetzt wird, wenn das Minimum ($T_{min}$) der Temperatur während der Laufzeit der Umwälzpumpe (3) einen zweiten Schwellenwert ($T_{S2}$) unterschreitet.

6. Verfahren nach Anspruch 4, dadurch gekennzeichnet, daß die Dauer der nachfolgenden Pausendauer $t_{Pw}$ aus der Basis-Pausendauer $t_{PB}$, dem ersten Schwellenwert $T_{S1}$ und dem zweiten Schwellenwert $T_{S2}$ nach folgender Formel berechnet wird:

$$t_{Pw} = t_{PB} \cdot \frac{T_x - T_{S2}}{T_{S1} - T_{S2}},$$

worin $T_x$ der Wert $T_{min}$, $T_E$ oder ein Mittelwert aus beiden ist.

7. Verfahren nach Anspruch 1, dadurch gekennzeichnet, daß ein Temperaturgradient während der Laufzeit der Umwälzpumpe (3) ermittelt wird und dieser Gradient die Pausendauer ($t_{Pw}$) bis zum nächsten Einschalten der Pumpe bestimmt.

8. Verfahren nach Anspruch 6, dadurch gekennzeichnet, daß die Pausendauer ($t_{Pw}$) unabhängig von der Unterschreitung einer der Temperaturschwellen ($T_{S1}$, $T_{S2}$) auf einen Maximalwert ($t_{Pmax}$) begrenzt wird.

9. Verfahren nach Anspruch 6, dadurch gekennzeichnet, daß die Pausendauer ($t_{Pw}$) auf einen Minimalwert ($t_{Pmin}$) gesetzt wird, wenn der berechnete Wert der Ausschaltdauer kleiner ist als dieser Minimalwert ($t_{Pmin}$).

10. Verfahren nach einem der Ansprüche 1 bis 9, dadurch gekennzeichnet, daß die Einschaltdauer ($t_E$) der Umwälzpumpe (3) eine konstante Größe ist.

**11.** Verfahren nach einem der Ansprüche 1 bis 10, dadurch gekennzeichnet, daß die erste Pausendauer ($t_{P1}$) eine konstante Größe ist.

**12.** Verfahren nach einem der Ansprüche 4 bis 11, dadurch gekennzeichnet, daß die Basis-Pausendauer ($t_{PB}$) eine konstante Größe ist.

**13.** Verfahren nach einem der Ansprüche 4 bis 12, dadurch gekennzeichnet, daß beim Unterschreiten des ersten Schwellenwertes ($T_{S1}$) ein im Heizungskreislauf vorhandenes Mischventil geöffnet wird.

**14.** Vorrichtung zur Durchführung des Verfahrens nach einem der Ansprüche 1 bis 13 mit einem Heizungsregler (1), der von einem im Heizungskreislauf angeordneten Temperaturfühler (2) beeinflußbar ist, mindestens einen Sollwertgeber (4, 5, 6) und Mittel zur Steuerung der Umwälzpumpe (3) aufweist, dadurch gekennzeichnet, daß sie ein Rechenglied (7) enthält, das einen Eingang aufweist, der mit dem im Heizungskreislauf angeordneten Temperaturfühler (2) verbunden ist, und das einen Ausgang aufweist, der mit einem Schaltglied (8) verbunden ist, das die Umwälzpumpe (3) steuert, und daß das Rechenglied (7) das Merkmal des Temperaturverlaufs bei der Berechnung der Pausendauer ($t_{Pw}$) einbezieht.

**15.** Vorrichtung nach Anspruch 14, dadurch gekennzeichnet, daß weitere Eingänge des Rechenglieds (7) mit Sollwertgebern (4, 5, 6) für den ersten und den zweiten und den dritten Schwellenwert ($T_{S1}$, $T_{S2}$, $T_{S3}$) verbunden sind.

## Claims

**1.** A method of controlling a circulating pump (3) of a heating installation having a heat generator and frost-endangered conduit portions by means of a heating regulator (1) which has at least one reference value generator (4, 5, 6) and is influenced by a temperature sensor (2) arranged in the heating circuit, characterised in that during a lowered-heating period the circulating pump (3) is periodically switched on for a given time ($t_E$), that in the region of that time ($t_E$) or adjoining that time ($t_E$) a feature of the variation in temperature is ascertained by means of the temperature sensor (2) arranged in the heating circuit and that the pause period ($t_{Pw}$) until the circulating pump (3) is next switched on is determined on the basis of that feature.

**2.** A method according to claim 1 characterised in that the minimum ($T_{min}$) in respect of temperature is ascertained during the period of operation of the circulating pump (3) and that minimum ($T_{min}$) determines the pause period ($t_{Pw}$) until the pump is next switched on.

**3.** A method according to claim 1 or claim 2 characterised in that the temperature ($T_E$) is ascertained at the end of the period of operation of the circulating pump (3) and that value ($T_E$) is taken into consideration for determining the pause period ($t_{Pw}$) until the circulating pump (3) is next switched on.

**4.** A method according to one of claims 1 to 3 characterised in that the pause period ($t_{Pw}$) is made dependent on an adjustable base pause period ($t_{PB}$) and the extent to which the minimum ($T_{min}$) in respect of tem-perature during the period of operation of the circulating pump (3) and/or the temperature ($T_E$) at the end of the period of operation of the circulating pump (3) falls below a first threshold value ($T_{S1}$).

**5.** A method according to claim 3 characterised in that the pause period ($t_{Pw}$) is set equal to zero if the mini-mum ($T_{min}$) in respect of temperature during the period of operation of the circulating pump (3) falls below a second threshold value ($T_{S2}$).

**6.** A method according to claim 4 characterised in that the duration of the subsequent pause period ($t_{Pw}$) is calculated from the base pause period ($t_{PB}$), the first threshold value ($T_{S1}$) and the second threshold value ($T_{S2}$), in accordance with the following formula:

$$t_{Pw} = t_{PB} \cdot \frac{T_x - T_{S2}}{T_{S1} - T_{S2}},$$

wherein $T_x$ is the value $T_{min}$, $T_E$ or a mean value of the two.

6

7. A method according to claim 1 characterised in that a temperature gradient during the period of operation of the circulating pump (3) is ascertained and that gradient determines the pause period ($t_{Pw}$) until the pump is next switched on.

8. A method according to claim 6 characterised in that the pause period ($t_{Pw}$) is limited to a maximum value ($t_{Pmax}$) irrespective of the temperature falling below one of the temperature thresholds ($T_{S1}$, $T_{S2}$).

9. A method according to claim 6 characterised in that the pause period ($t_{Pw}$) is set to a minimum value ($t_{Pmin}$) if the calculated value of the switch-off period is less than said minimum value ($t_{Pmin}$).

10. A method according to one of claims 1 to 9 characterised in that the switch-on time ($t_E$) of the circulating pump (3) is a constant value.

11. A method according to one of claims 1 to 10 characterised in that the first pause period ($t_{P1}$) is a constant value.

12. A method according to one of claims 4 to 11 characterised in that the base pause period ($t_{PB}$) is a constant value.

13. A method according to one of claims 4 to 12 characterised in that, when the temperature falls below the first threshold value ($T_{S1}$) a mixing valve in the heating circuit is opened.

14. Apparatus for carrying out the method according to one of claims 1 to 13 having a heating regulator (1) which can be influenced by a temperature sensor (2) arranged in the heating circuit and has at least one reference value generator (4, 5, 6) and means for controlling the circulating pump (3), characterised in that it includes a calculating member (7) which has an input connected to the temperature sensor (2) arranged in the heating circuit and which has an output connected to a control member (8) which controls the circulating pump (3), and that the calculating member (7) includes the feature of the variation in temperature in the calculation of the pause period ($t_{Pw}$).

15. Apparatus according to claim 14 characterised in that further inputs of the calculating member (7) are connected to reference value generators (4, 5, 6) for the first and the second and the third threshold values ($T_{S1}$, $T_{S2}$, $T_{S3}$).

**Revendications**

1. Procédé de commande d'une pompe de circulation (3) d'une installation de chauffage comportant un générateur de chaleur et des parties de canalisations risquant le gel, au moyen d'un régulateur de chauffage (1) qui comporte au moins un générateur de valeur de consigne (4, 5, 6) et qui est influencé par un capteur de température (2) disposé dans le circuit de chauffage, caractérisé en ce que, pendant une période de réduction de régime, la pompe de circulation (3) est enclenchée périodiquement pendant un temps déterminé ($t_E$), en ce que, dans un intervalle comprenant ce temps ($t_E$) ou bien adjacent à ce temps ($t_E$), une caractéristique de variation de température est déterminée au moyen du capteur de température (2) disposé dans le circuit de chauffage et en ce que la durée de pause ($t_{Pw}$) est déterminée sur la base de cette caractéristique jusqu'à l'enclenchement suivant de la pompe de circulation (3).

2. Procédé selon la revendication 1, caractérisé en ce le minimum ($T_{min}$) de la température est déterminé pendant le temps de fonctionnement de la pompe de circulation (3) et ce minimum ($T_{min}$) détermine la durée de pause ($t_{Pw}$) jusqu'à l'enclenchement suivant de la pompe.

3. Procédé selon la revendication 1 ou 2, caractérisé en ce que la température ($T_E$) est déterminée à la fin du temps de fonctionnement de la pompe de circulation (3) et cette valeur ($T_E$) est prise en considération pour la détermination de la durée de pause ($T_{Pw}$) jusqu'à l'enclenchement suivant de la pompe de circulation (3).

4. Procédé selon une des revendications 1 à 3, caractérisé en ce que la durée de pause ($t_{Pw}$) est rendue dépendante d'une durée de pause de base ($t_{PB}$) réglable et elle est également rendue dépendante du dégré dont la température minimale ($T_{min}$) diminue en-dessous d'une première valeur de seuil ($T_{S1}$) pendant le temps de fonctionnement de la pompe de circulation (3) et/ou du degré dont la température ($T_E$) diminue en-dessous d'une première valeur de seuil ($T_{S1}$) à la fin du temps de fonctionnement de la pompe de circulation (3).

5.  Procédé selon la revendication 3, caractérisé en ce que la durée de pause ($t_{Pw}$) est remise à zéro quand le minimum ($T_{min}$) de la température diminue en-dessous d'une seconde valeur de seuil ($T_{S2}$) pendant le temps de fonctionnement de la pompe de circulation (3).

6.  Procédé selon la revendication 4, caractérisé en ce que la durée de la pause suivante ($t_{Pw}$) est calculée, à partir de la durée de pause de base ($t_{PB}$), de la première valeur de seuil ($T_{S1}$) et de la seconde valeur de seuil ($T_{S2}$), d'après la formule suivante :
    Valeur de seuil $T_{S1}$ = 16 degrés (Domaine de régulation 5-20 degrés)
    Valeur de seuil $T_{S2}$ = 6 degrés (Domaine de régulation 4-15 degrés)
    Valeur de seuil $T_{S3}$ = 4 degrés (Domaine de régulation 2-12 degrés),
    où $T_x$ à la valeur de $T_{min}$, de $T_E$ où une valeur moyenne des deux valeurs précitées.

7.  Procédé selon la revendication 1, caractérisé en ce qu'un gradient de température est déterminé pendant le temps de fonctionnement de la pompe de circulation (3) et ce gradient définit la durée de pause ($t_{Pw}$) jusqu'à l'enclenchement suivant de la pompe.

8.  Procédé selon la revendication 6, caractérisé en ce que la durée de pause ($t_{Pw}$) est limitée à une valeur maximale ($t_{Pmax}$) indépendamment du dépassement par défaut d'un des seuils de température ($T_{S1}$, $T_{S2}$).

9.  Procédé selon la revendication 6, caractérisé en ce que la durée de pause ($t_{Pw}$) est réglée à une valeur minimale ($t_{Pmin}$) lorsque la valeur calculée de la durée d'arrêt est plus petite que cette valeur minimale ($t_{Pmin}$).

10.  Procédé selon une des revendications 1 à 9, caractérisé en ce que la durée d'enclenchement ($t_E$) de la pompe de circulation (3) a une grandeur constante.

11.  Procédé selon une des revendications 1 à 10, caractérisé en ce que la première durée de pause ($t_{P1}$) a une grandeur constante.

12.  Procédé selon une des revendications 4 à 11, caractérisé en ce que la durée de pause de base ($t_{PB}$) a une grandeur constante.

13.  Procédé selon une des revendications 4 à 12, caractérisé en ce que, lors d'un dépassement par défaut de la première valeur de seuil ($T_{S1}$), une vanne mélangeuse prévue dans le circuit de chauffage est ouverte.

14.  Dispositif pour la mise en oeuvre du procédé selon une des revendications 1 à 13, comportant un régulateur de chauffage (1), qui peut être influencé par un capteur de température (2) disposé dans le circuit de chauffage, au moins un générateur de valeur de consigne (4, 5, 6) et des moyens de commande de la pompe de circulation (3), caractérisé en ce qu'il comprend un calculateur (7), comportant une entrée reliée au capteur de température (2) disposé dans le circuit de chauffage, ainsi qu'une sortie reliée à un organe de commutation (8), qui commande la pompe de circulation (3), et en ce que le calculateur (7) tient compte de la caractéristique de variation de la température lors du calcul de la durée de pause ($t_{Pw}$).

15.  Dispositif selon la revendication 14, caractérisé en ce que d'autres entrées du calculateur (7) sont reliées à des générateurs de valeurs de consigne (4, 5, 6) concernant la première, la seconde et la troisième valeur de seuil ($T_{S1}$, $T_{S2}$, $T_{S3}$).

# Fig. 1a

# Fig. 1b

# Fig. 1c

# Fig. 2